(19) Europäisches Patentamt / European Patent Office / Office européen des brevets

(11) **EP 2 517 874 A1**

(12) **EUROPEAN PATENT APPLICATION**
published in accordance with Art. 153(4) EPC

(43) Date of publication:
**31.10.2012 Bulletin 2012/44**

(51) Int Cl.:
**B32B 9/00** (2006.01)   **B32B 27/00** (2006.01)
**C01B 33/40** (2006.01)

(21) Application number: **10838979.2**

(22) Date of filing: **24.12.2010**

(86) International application number:
**PCT/JP2010/007483**

(87) International publication number:
**WO 2011/077741 (30.06.2011 Gazette 2011/26)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.12.2009 JP 2009291807**

(71) Applicant: **Tomoegawa Co., Ltd.
Tokyo 104-8335 (JP)**

(72) Inventors:
• **TSUDA, Hajime
  Shizuoka-shi
  Shizuoka 421-0192 (JP)**
• **MOTEGI, Katsumi
  Shizuoka-shi
  Shizuoka 421-0192 (JP)**

(74) Representative: **HOFFMANN EITLE
Patent- und Rechtsanwälte
Arabellastrasse 4
81925 München (DE)**

(54) **CLAY FILM COMPOSITE**

(57)   A clay film composition which exhibits high gas barrier properties even under high humidity conditions is provided.

Disclosed is a clay film composite having a clay film comprising a clay only or of a clay and an additive, and provided on at least one surface thereof, a water vapor barrier layer having a water permeability of 1.0 g/m²·day or less. The clay film preferably has a distance between clay particle layers of 1.3 nm or less. The clay film preferably has a water content of 3.0% by mass or less. It is preferable to melt-bond the water vapor barrier layer to the clay film.

[FIG. 1]

EP 2 517 874 A1

**Description**

Technical Field

The present invention relates to a clay film composite which includes a clay film as a layer.

Background Art

Clays, which are represented by smectites, form a clay film in which flaky particles are arranged in layers, when dispersed in water and then left to stand to dry. The flaky clay particles themselves do not allow permeation of gas. A clay film which is highly arranged in layers exhibits a labyrinth effect, and has high gas barrier properties in a sufficiently dried state. Furthermore, even if the clay film is detached from a base material, the clay film can exist by itself as a film having flexibility.

However, since strongly hydrophilic ions such as sodium ions are present at the surface of clay particles, a clay film produced by these clay particles is susceptible to penetration of water molecules into between clay particle layers, and distance is formed between the clay particle layers. Therefore, the clay film has not been able to maintain gas barrier properties under a high humidity atmosphere.

Thus, in order to prevent the penetration of water molecules into the clay film, an organically modified hydrophobic clay in which the hydrophilic ions present at the surface of clay particles have been exchanged with organic ions, has been disclosed (see, for example, Patent Literature 1). Furthermore, it is known that liquid water resistance can be enhanced by providing a hydrophobic coating layer to the clay film (see, for example, Patent Literature 2).

Citation List

Patent Literature

Patent Literature 1: Japanese Patent Application Laid-Open (JP-A) No. 2007-84386
Patent Literature 2: JP-A No. 2006-188408

Summary of Invention

Technical Problem

Liquid water resistance can be enhanced to a certain extent by the method of Patent Literature 1. However, in the method of Patent Literature 1, since the distance between the clay particle layers is widened by the organic substances (or organic ions) constituting the organically modified clay, gas barrier properties was not exhibited to a high extent.

In the method of Patent Literature 2, an organic film such as a fluorine-based coating film, a silicone-based film, a polysiloxane film, a fluorine-containing organopolysiloxane film, an acrylic resin film, a vinyl chloride resin film, or a polyurethane resin film can be used as the coating layer. However, in these films, the penetration of water vapor has not been able to be sufficiently prevented, and water molecules penetrate between the clay particle layers and expand the distance between the particle layers. Accordingly, under high humidity conditions, gas barrier properties have not been able to be sufficiently exhibited to a high extent. Furthermore, when a highly water-repellent plating film, a metal deposit layer, or a carbon deposit layer is used as the coating layer, there is a problem that cracks occur in these layers at the time of bending, or the coating layer is peeled off from the clay layer.

The invention was made in view of such problem, and it is an object of the invention to provide a clay film composition which exhibits high gas barrier properties even under high humidity conditions.

Solution to Problem

The invention can solve the problem described above by the following technical constitutions.

(1) A clay film composite having a clay film comprising a clay only or of a clay and an additive, and provided on at least one surface thereof, a water vapor barrier layer having a water vapor permeability of 1.0 $g/m^2 \cdot day$ or less.

(2) The clay film composite as described in the above item (1), in which the distance between clay particle layers of the clay film is 1.3 nm or less.

(3) The clay film composite as described in the above item (1) or (2), in which the water content of the clay film is 3.0% by mass or less.

(4) The clay film composite as described in any one of the above items (1) to (3), in which the water vapor barrier layer and the clay film are melt-bonded.

(5) The clay film composite as described in any one of the above items (1) to (4), in which a main constituent component of the clay film is a natural clay or a synthetic clay.

(6) The clay film composite as described in the above item (5), in which the natural clay or synthetic clay is one or more selected from the group consisting of kaolinite, dickite, halloysite, chrysotile, lizardite, amesite, pyrophyllite, talc, montmorillonite, beidellite, nontronite, stevensite, saponite, hectorite, sauconite, dioctahedral vermiculite, trioctahedral vermiculite, muscovite, paragonite, illite, sericite, phlogopite, biotite, lepidolite, magadiite, ilerite, kanemite, and layered titanate.

(7) The clay film composite as described in any one of the above items (1) to (6), in which the additive in the clay film is soluble in a polar solvent at a solids concentration of 1% by mass or more.

(8) The clay film composite as described in any one of the above items (1) to (7), in which the proportion of the additive in the clay film is 20% by mass or less.

(9) The clay film composite as described in the above item (7), in which the polar solvent is one or more selected from the group consisting of water, acetonitrile, alcohols, N,N-dimethylformamide, dimethylacetamide, dimethyl sulfoxide and 1-methyl-2-pyrrolidone.

(10) The clay film composite as described in any one of the above items (1) to (9), in which the water vapor barrier layer is one or more selected from the group consisting of polychlorotrifluoroethylene (PCTFE), polytetrafluoroethylene (PTFE), a tetrafluoroethylene-hexafluoropropylene copolymer (FEP), polyethylene (PE), polyethylene naphthalate (PEN), polypropylene (PP), a cycloolefin polymer (COP), a norbornene-containing resin, polyvinylidene chloride (PVDC), polyvinyl chloride (PVC), polyvinyl fluoride (PVF), a liquid crystal polymer (LCP), an aromatic polyamide, a metal film, a metal oxide film, a silicon oxide film, a silicon nitride film, a silicon oxynitride film, an indium tin oxide (ITO) film, a boron nitride film, a carbon nitride film, an aluminum nitride film, a carbon film, and an organically modified hydrophobic clay film.

(11) The clay film composite as described in any one of the above items (1) to (10), in which the thickness of the water vapor barrier layer is 2 $\mu$m to 100 $\mu$m.

(12) The clay film composite as described in any one of the above items (1) to (11), in which the surface and end faces of the clay film are covered by the water vapor barrier layer.

Advantageous Effects of Invention

According to the invention, a clay film composite which exhibits high gas barrier properties even under high humidity conditions can be provided.

Brief Description of Drawings

FIG. 1 is a cross-sectional view illustrating a clay film composite of the invention.
FIG. 2 is a cross-sectional view illustrating another clay film composite of the invention.
FIG. 3 is a scanning electron microscopic photograph of the cross-section of the clay film constituting the invention.
FIG. 4 is an X-ray diffraction chart of the clay film constituting the invention.

Description of Embodiments

<Clay film composite>

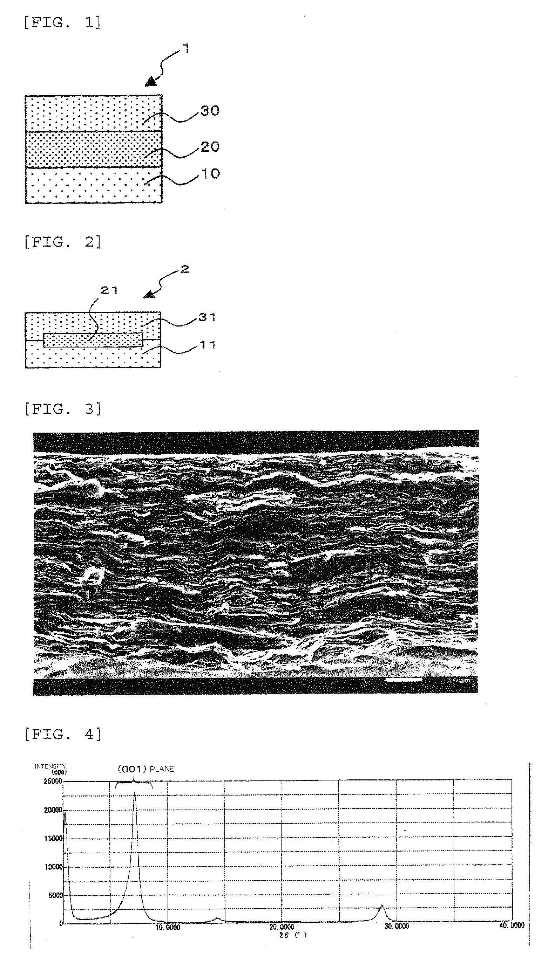

As illustrated in FIG. 1, the clay film composite of the invention (hereinafter, may be referred to as "composite") is a composite 1 including a clay film 20, and a first water vapor barrier layer 10 and a second water vapor barrier layer 30 layered thereon. The first water vapor barrier layer 10 and the second water vapor barrier layer 30 are layered on the clay film 20 directly or with other layer (s) interposed therebetween. Examples of the other layer include an adhesive layer and a pressure-sensitive adhesive layer. The lamination of the water vapor barrier layer on the clay film may be carried out such that a water vapor barrier layer that has been formed in advance into a film shape may be bonded to the clay film, or the water vapor barrier layer may be provided directly on the clay film by a coating method, a melt extrusion method, a plating method, a vacuum film-forming method, or the like. Here, an example of forming the water vapor barrier layer on both surfaces of the clay film is illustrated under an assumption that both the surfaces of the clay film are exposed to high humidity. However, in the case where only one of the surfaces of the clay film is exposed to high humidity, it is acceptable to provide the water vapor barrier layer on one surface.

The thickness of the clay film composite in which a water vapor barrier layer is provided on one surface of the clay film can be adjusted to any thickness. In the applications where the clay film composite is required to have flexibility and bendability, the thickness can be controlled according to the extent of demand. A preferred range of the thickness is, for example, 500 μm or less, more preferably 300 μm or less, and particularly preferably 100 μm or less. There are no particular limitations on the lower limit, but the lower limit is, for example, 0.1 μm.

As illustrated in FIG. 2, another composite of the invention is a composite 2 formed such that a clay film 21 is embedded between a first water vapor barrier layer 11 and a second water vapor barrier layer 31. The clay film 21 may be embedded between the first water vapor barrier layer 11 and the second water vapor barrier layer 31, and the first water vapor barrier layer 11, the clay film 21, and the second water vapor barrier layer 31 may be layered directly or may be layered with other layer(s) interposed therebetween. Therefore, it is not necessary that the clay film 21 be disposed adjacently to the first water vapor barrier layer 11 or the second water vapor barrier layer 31. When the configuration of FIG. 2 is employed, the end faces of the clay film 21 are not exposed to external air, and the penetration of water molecules through the end faces can be prevented. At the same time, even when the adhesiveness between the clay film 21 and the water vapor barrier layer is poor, the strength of the composite can be maintained by increasing the adhesiveness between the water vapor barrier layers. This configuration is suitable for applications where a balance between strength and bendability is required, such as a hose material.

In the case of embedding the clay film 21 between the first water vapor barrier layer 11 and the second water vapor barrier layer 31 as illustrated in FIG. 2, it is preferable that at least one of the first water vapor barrier layer 11 and the second water vapor barrier layer 31 be a thermoplastic resin film. When the layers are disposed as illustrated in FIG. 2 and then heated, at least one of the first water vapor barrier layer 11 and the second water vapor barrier layer 31 is melt-bonded to the other resin film, and thereby, the gap between the resin films can be decreased. Furthermore, because the clay film and the water vapor barrier layers are also melt-bonded, and an anchor effect is exhibited to cause the layers to strongly adhere to each other, the configuration is also preferable to the clay film composite of FIG. 1. Thereby, the penetration of water molecules can be reduced, and the gas barrier properties of the composite in a high humidity atmosphere can be enhanced.

Furthermore, it is more preferable to employ a thermoplastic resin film for both the first water vapor barrier layer and the second water vapor barrier layer. Since not only the adhesiveness between the resin films but also the adhesiveness between the resin films and the clay film is improved thereby, the gas barrier properties of the composite in a high humidity atmosphere can be enhanced.

The invention provides a clay film composite which maintains high gas barrier properties even under high humidity, by unifying a clay film and a water vapor barrier layer as a whole. A clay film exhibits high gas barrier properties in a state in which water molecules do not excessively intercalate between the clay particle layers, that is, in a state in which there is no distance between the clay particle layers. A water vapor barrier layer has low water vapor permeability.

Furthermore, the composite of the invention can achieve a good balance between high gas barrier properties and bending resistance even under high humidity conditions.

In regard to the permeability of various gases including water vapor, it is known that the behavior varies depending on the type of the gas. For example, the water vapor permeation coefficient of a polychlorotrifluoroethylene film (PCTFE) is 0.0001 g·mm/m$^2$·day, while the oxygen permeation coefficient is 3 cc·mm/m$^2$·day·atm. On the other hand, the water vapor permeation coefficient of nylon is 750 g·mm/m$^2$·day, while the oxygen permeation coefficient is 1 cc·mm/m$^2$·day·atm. The water vapor barrier layer according to the invention is acceptable as long as the barrier layer can suppress the permeation of water vapor, and shielding properties against other gases are not required.

According to the invention, high gas barrier properties under high humidity conditions represent that when the gas permeability of a composite is measured under the conditions of 40°C x 90% RH, the oxygen permeability measured by the method of JIS K4126 is 1.0 cc/m$^2$·day·atm or less. Here, the oxygen permeability is taken as a representative example, but if the permeability to other gases is also 1.0 cc/m$^2$·day·atm or less, the composite can be assumed to have high gas barrier properties.

Furthermore, according to the invention, excellent bending resistance represents that when a clay film composite is bent by winding around an object having a radius of curvature of 5 mm, and the oxygen permeability under the conditions of 40°C x 90% RH is measured before and after bending, the value measured after bending is not twice or higher the value measured before bending.

Hereinafter, the layers constituting the clay film composite of the invention will be described.

<Water vapor barrier layer>

The water vapor permeability of the water vapor barrier layer of the invention is preferably 1.0 g/m$^2$·day or less, more preferably 0.1 g/m$^2$·day or less, and particularly preferably 0.01 g/m$^2$·day or less. By preventing the permeation of water vapor, expansion of the distance between the clay particle layers of the clay film can be prevented, and high gas barrier properties can be maintained not only under dry conditions but also under high humidity conditions.

The thickness of the water vapor barrier layer of the invention is such that a large thickness is preferred in order to decrease the water vapor permeability, and a small thickness is preferred in the applications where flexibility and bendability are required. Any thickness can be employed depending on the application, but as a representative example, the thickness is preferably 300 $\mu$m or less, more preferably 200 $\mu$m or less, and particularly preferably 100 $\mu$m or less. In the applications where flexibility and bendability are not needed, even a sheet-shaped object having a thickness of 1 mm or more may be used as the water vapor barrier layer. In the applications where flexibility and bendability are needed, the thickness is preferably 2 $\mu$m to 100 $\mu$m, more preferably 2 $\mu$m to 50 $\mu$m, and particularly preferably in the range of 2 $\mu$m to 25 $\mu$m. As the thickness of the water vapor barrier layer increases, the water vapor permeability decreases, while bending resistance decreases. When the thickness is adjusted to the range, a balance can be achieved between the water vapor barrier properties and bending resistance.

As the water vapor barrier layer, various resins such as polychlorotrifluoroethylene (PCTFE), polyethylene tetrafluoride (PTFE), a tetrafluoroethylene-hexafluoropropylene copolymer (FEP), polyethylene (PE), polyethylene naphthalate (PEN), polypropylene (PP), a cycloolefin polymer (COP), a norbornene-containing resin, polyvinylidene chloride (PVDC), polyvinyl chloride (PVC), polyvinyl fluoride (PVF), a liquid crystal polymer (LCP), and an aromatic polyamide can be suitably used. These resins may be used such that a resin that has been formed in advance into a film form may be bonded to the clay film, or the resin may be provided directly on the clay film by a coating method or a melt extrusion method. Among them, it is preferable to use a thermoplastic resin film which can be thermally compressed with the clay film. The resins described above may be used singly, or a plurality of resins may be used as mixtures, copolymers, or laminates.

As the water vapor barrier layer other than these, a metal layer, a carbon layer, or the like can be used, and in addition, an oxide layer, a nitride layer, and an oxynitride layer thereof may also be used. Examples of the oxide layer include a metal oxide layer, a silicon oxide layer, and an indium tin oxide (ITO) layer. Examples of the nitride layer include a silicon nitride layer, a boron nitride layer, a carbon nitride layer, and an aluminum nitride layer. Examples of the oxynitride layer include a silicon oxynitride layer. These can be layered on the clay film by methods such as plating, deposition, chemical vapor deposition (CVD), sputtering, and ion plating.

Furthermore, an organically modified hydrophobic clay layer can also be used as the water vapor barrier layer.

<Second water vapor barrier layer>

The first water vapor barrier layer and the second water vapor barrier layer can be each independently selected depending on the required characteristics. Of course, the first water vapor barrier layer and the second water vapor barrier layer may be identical, and may be simultaneously provided.

When the affinity of the clay film and the water vapor barrier layer is low, it is preferable to enhance the affinity by subjecting the clay film or the water vapor barrier layer to a surface modification treatment. Examples of the surface modification treatment include treatments such as an alkali treatment, a corona treatment, a plasma treatment, a sputtering treatment, and a flame treatment; primer coating using a surfactant, a silane coupling agent, or the like; and thin film dry coating such as Si deposition.

<Clay film>

The clay film constituting the invention has an oxygen permeability which is, in a dry state under a dry atmosphere at 40°C, preferably 1.0 cc/m$^2$·day·atm or less, more preferably 0.1 cc/m$^2$·day·atm or less, and particularly preferably 0.01 cc/m$^2$·day·atm or less. Since the clay film constituting the invention is arranged such that clay particle layers are piled up in layers, the clay film exhibits a labyrinth effect and exhibits high gas barrier properties. That is, there is no expansion of the distance between the clay particle layers caused by excessive moisture, additives, and interlayer (organic) ions, and the distance between the clay particle layers is preferably 1.3 nm or less, and more preferably 1.2 nm or less. As the distance between the clay particle layers is smaller, the clay film exhibits a labyrinth effect and exhibits high gas barrier properties. However, as the lower limit of the distance between the clay particle layers, for example, in the case of montmorillonite, the lower limit is 0.98 nm. The gas barrier properties are also dependent on the number of the clay particle layers, but when the thickness of the clay film is in the range of 1 $\mu$m to 100 $\mu$m, the gas barrier properties in the range described above can be easily achieved, which is preferable.

In order to adjust the distance between the clay particle layers to 1.3 nm or less, it is preferable to adjust the water content of the clay film at the time point of laminating the water vapor barrier layer to 3.0% by mass or less, more preferably to 2.0% by mass or less, and particularly preferably to 1.0% by mass or less. The water content of the clay film at the time point of laminating the water vapor barrier layer represents the water content of the clay film supplied to lamination, and the water content is a value obtained by subtracting the clay film mass after heating at 150°C x 30 min from the clay film mass before heating at 150°C x 30 min, and dividing the difference by the clay film mass before heating, and expressed in percentage (%).

In order to adjust the distance between the clay particle layers to 1. 3 nm or less, it is preferable to adjust, in addition to the water content of the clay film, the amount of additives in the clay film to 20% by mass or less, and more preferably to 10% by mass or less. By adding the additives, the strength of the clay film can be increased, or liquid water resistance can be increased. However, on the other hand, the distance between the clay particle layers is extended, and the gas barrier properties under dry conditions are decreased.

(Clay)

There are no particular limitations on the clay that constitutes the clay film, and the clay can be selected as necessary. For example, a natural clay or a synthetic clay may be used. Specifically, it is preferable to use one or more selected from the group consisting of kaolinite, dickite, halloysite, chrysotile, lizardite, amesite, pyrophyllite, talc, montmorillonite, beidellite, nontronite, stevensite, saponite, hectorite, sauconite, dioctahedral vermiculite, trioctahedral vermiculite, muscovite, paragonite, illite, sericite, phlogopite, biotite, lepidolite, magadiite, ilerite, kanemite, and layered titanate. Among them, it is particularly preferable to use hectorite, stevensite, saponite, and montmorillonite, because orientation based on self-organization is likely to occur because these clays are highly swellable and exhibit a flat-shaped morphology with a particle size in the nanometer order, and the clays are relatively easily available. These clays may be used singly, or may be used in combination.

Furthermore, when the clay film is needed to have transparency, it is preferable to use a synthetic clay. Since a synthetic clay has less impurities that cause coloration as compared with natural clays, and has a smaller clay particle size, a film using a synthetic clay is imparted with transparency.

(Additive)

As the additive, a component which dissolves in a polar solvent that will be described below in an amount of 1% by mass or more, can be appropriately selected for the purpose of enhancing the strength of the clay film and enhancing liquid water resistance. For example, various kinds of general additives such as a resin, a curing aid, an oxidation inhibitor, a surfactant, a pH adjusting agent, a salt, and a leveling agent, can be incorporated. When these additives are added, the characteristics of the clay dispersion liquid, for example, viscosity or solids content, can be controlled. Furthermore, a clay film obtained using a clay dispersion liquid to which additives have been added contains the additive components, and the additive components may affect the improvement of the characteristics of the clay film. For example, when a resin is added, an increase in the strength of the clay film or impartation of flexibility may be enabled.

(Clay dispersion liquid)

The clay dispersion liquid (hereinafter, may be simply referred to as dispersion liquid) may be any dispersion liquid which is capable of producing a clay film by dispersing a clay in a polar solvent, subsequently appropriately adding an additive as necessary, dispersing the mixture to prepare a clay dispersion liquid, subsquently applying the clay dispersion liquid on a base material, and removing the solvent included in the clay dispersion liquid. Preferred examples of the polar solvent include water, acetonitrile, alcohols, N,N-dimethylformamide, dimethylacetamide, dimethyl sulfoxide, and 1-methyl-2-pyrrolidone. These polar solvents may be used singly, or may be used as mixtures.

The amount of the polar solvent is preferably 500 to 20, 000 parts by mass, and more preferably 1, 000 to 10,000 parts by mass, relative to 100 parts by mass of the clay. Additionally, in order to disperse the clay in such a polar solvent, a general stirrer such as a rotary stirrer or a shaking stirrer can be used.

Furthermore, it is desirable to heat the clay dispersion liquid when the dispersion liquid is dispersed. As the temperature, when the dispersion liquid is stirred while heated to 50°C to 80°C, dispersion of the clay can be efficiently carried out.

(Formation of clay film)

The clay film of the invention can be obtained by applying a clay dispersion liquid obtained by the method described as an example or the like on a base material, or allowing the clay dispersion liquid to flow into a container, and then removing the polar solvent in the clay dispersion liquid. As the method of removing the solvent, drying with heated hot air is simple and convenient; however, infrared drying, far-infrared drying, microwave drying, vacuum drying, solid-liquid separation by centrifugation, or the like can be appropriately selected. It is also acceptable to leave the dispersion liquid to stand, without using any special drying unit, and to wait for the solvent to vaporize and dry.

The clay film of the invention can have any surface morphology. A base material used in the formation of a clay film having a flat surface is not particularly limited as long as the surface is flat, no deformation occurs at the clay drying temperature, and peeling of the clay film after drying is easy, and the base material can be selected as necessary. Among others, it is preferable to use a polyethylene terephthalate film which can be used at relatively low costs, as the base material. On the other hand, as the container, it is preferable to use a container coated with a fluororesin. Furthermore, a member in which a clay film and another member are unified as a whole can also be obtained. Specifically, a composite member in which a clay film has been formed on an arbitrary member can be obtained by applying the clay dispersion liquid of the invention, or performing a dipping process or the like, on a member which is intended to be unified as a whole, and then removing the solvent. There are no particular limitations on the morphology of the member intended to be unified as a whole, and even on a member having a complicated morphology having a curved surface, a clay film can be produced as long as the clay dispersion liquid can penetrate thereinto, and getting into a composite can be achieved.

A base material that is used in the formation of a clay film having a non-flat surface does not necessarily require that the surface be flat, and that deformation do not occur at the clay film drying temperature. When a base material having a non-flat surface is used at the time of forming a clay film, the surface morphology (for example, the concavo-convex morphology) of the base material is transferred to the surface of the clay film, and a clay film having anti-glare properties can be formed. Furthermore, when the surface of the clay film is appropriately roughened, an anchor effect is exhibited at the time of laminating the water vapor barrier layer, and the adhesiveness between the clay film and the water vapor barrier layer can be increased.

Furthermore, when the first water vapor barrier layer or the second water vapor barrier layer is used as the base material for film composite formation, an enhancement of the adhesiveness between the first water vapor barrier layer or the second water vapor barrier layer and the clay film can be expected, and it is also preferable in terms of cost.

A specific example of the method for forming a clay film will be described below. First, a clay dispersion liquid thus obtained is applied on a base material using an applicator or the like, or is poured into a container. Next, it is preferable to dry this dispersion liquid using a hot air-circulating electric hot air dryer or the like, and to thereby obtain a clay film. Meanwhile, the thickness of the clay dispersion liquid that is applied or poured in is preferably 50 $\mu$m to 5,000 $\mu$m. The preferred range of the thickness may vary with the solids concentration of the coating material, but a thickness which results in a thickness of dried clay film of 1 $\mu$m to 100 $\mu$m is preferred. The gas barrier properties of the clay film may be obtained by the labyrinth effect caused by a structure in which clay particles are highly oriented and layered. However, when the thickness is less than 1 $\mu$m, even if the labyrinth effect is exhibited, the distance of passage is short, and when the thickness is greater than 100 $\mu$m, bypaths of the solvent are formed at the time of drying, and cause impairment of the gas barrier properties. A thickness of 5 $\mu$m to 50 $\mu$m is more preferred.

(Layered water vapor barrier layer)

The method of layering water vapor barrier layer can be appropriately selected in accordance with the water vapor barrier material. If the material is a resin-based material, the water vapor barrier material may be directly applied or melt extruded on the clay film, or a water vapor barrier layer which has been formed in advance into a film form may be bonded using an adhesive or a pressure-sensitive adhesive, or may be directly heated and pressed. In the case of using a metal film, a metal oxide film, a silicon oxide film, a silicon nitride film, a silicon oxynitride film, an indium tin oxide (ITO) film, a boron nitride film, a carbon nitride film, an aluminum nitride film, or a carbon film as the water vapor barrier layer, film-forming methods such as plating, deposition, chemical vapor deposition (CVD), sputtering, and ion plating can be used. In any case, when the water vapor barrier layer is layered on the clay film, it is necessary to devise a means that would not cause an increase in the water content of the clay film. It is preferable to layer the water vapor barrier layer after reducing the water content in the clay film by heating and degassing in advance. Additionally in the case of directly heating and pressing the water vapor barrier layer, when the process is carried out under a reduced pressure which is close to a vacuum, inclusion of air bubbles into the bonded surface can be prevented, and also, it is preferable for maintaining a low water content. The water content of the clay film is preferably 3% by mass or less, more preferably 2% by mass or less, and particularly preferably 1% by mass or less.

<Applications>

Since the clay film composite of the invention can exhibit high gas barrier properties under dry conditions and under high humidity conditions, the clay film composite can be preferably used for applications where gas barrier properties are required irrespective of humidity conditions. Furthermore, the clay film constituting the invention can suppress even the permeation of small molecules such as hydrogen molecules, and can therefore exhibit barrier properties against various gases.

Examples of the applications where gas barrier properties are required include sealing materials for containers, pipes (hoses) and connection parts for various gases (including sliding units), packaging materials for maintenance (storage), protective films, and shielding films.

Examples

Hereinafter, the invention will be described by way of Examples, but the invention is not intended to be limited to these.

(Example 1)

1. Production of clay film as member

19 g of natural montmorillonite, "KUNIPIA G" (manufactured by Kunimine Industries Co., Ltd.) as a clay, and 1 g of ε-caprolactam (manufactured by Wako Pure Chemical Industries, Ltd.) as an additive were added to 330 g of distilled water, and the mixture was stirred for 60 minutes at a speed of rotation of 5,000 rpm using an ace homogenizer, "AM-001" (manufactured by Nissei Corp.). Thus, a uniform clay dispersion liquid at a concentration of about 6% by mass was obtained. This clay dispersion liquid was treated to remove foams by drawing a vacuum in a vacuum dryer, and was applied into a film form on a polyethylene terephthalate film, "EMBLET S50" (manufactured by Unitika, Ltd.) using an applicator. The applied clay dispersion liquid was dried for one hour in a forced convection type oven under the temperature conditions of 100°C. The dried product was peeled off from the polyethylene terephthalate film, and then was further dried for 30 minutes at 150°C. Thus, a clay film having a thickness of about 40 μm was obtained.

2. Properties of clay film as member

The properties of this clay film as in a sufficiently dried state before the lamination of a water vapor barrier layer were measured. The water content of the clay film was 1.8% by mass. A photograph obtained with a scanning electron microscope is presented in FIG. 3. From FIG. 3, it can be seen that the clay particles are highly oriented. An X-ray diffraction chart of this thin clay film is presented in FIG. 4. A series of sharp bottom reflection peaks were observed, and it was found that the particles of the clay film were well oriented. Furthermore, from the 2θ values of the (001) plane illustrated in FIG. 4, the distance between clay particle layers was determined to be 1.17 nm.

3. Lamination of water vapor barrier layer

As a water vapor barrier layer, a polychlorotrifluoroethylene film having a water vapor permeability of 0.007 $g/m^2 \cdot day$, an oxygen permeability of 215 $cc/m^2 \cdot day \cdot atm$, and a thickness of 15 μm, "NEOFLON PCTFE" (manufactured by Daikin Industries, Ltd.), was used, and water vapor barrier layers were laminated on both surfaces of the clay film obtained as described above. Thus, a clay film composite was obtained. The lamination was carried out by stacking in an order of water vapor barrier layer/clay film/water vapor barrier layer, and the layers were bonded by pressing under pressure in a vacuum heating furnace at 200°C to respectively melt-bond (thermally compress) the clay film and the water vapor barrier layers. Thus, the clay film composite illustrated in FIG. 1 was produced.

(Example 2)

A clay film composite was produced in the same manner as in Example 1, except that a polyvinylidene chloride film having a water vapor permeability of 0.21 $g/m^2 \cdot day$, an oxygen permeability of 430 $cc/m^2 \cdot day \cdot atm$, and a thickness of 25 μm, "SARAN UB" (manufactured by Asahi Kasei Chemicals Corp.), was used as the water vapor barrier layer on both surfaces of the clay film produced in Example 1, and the clay film and the water vapor barrier layers were respectively melt-bonded (thermally compressed) in a vacuum heating furnace at a temperature of 120°C.

(Example 3)

A cycloolefin polymer film having a water vapor permeability of 0.72 $g/m^2 \cdot day$, an oxygen permeability of 980 $cc/m^2 \cdot day \cdot atm$, and a thickness of 100 μm, "ZEONOR" (manufactured by Zeon Corp.) was used as the water vapor barrier layer on both surfaces of the clay film produced in Example 1, and the clay film and the water vapor barrier layers were respectively melt-bonded (thermally compressed). At this time, the cycloolefin polymer film was cut to a size larger than the clay film, so that the cycloolefin polymer films were melt-bonded with each other at the outer periphery of the clay film composite, and the cross-sections of the clay film were prevented from being directly exposed to external air. Other than that, the production was carried out in the same manner as in Example 2, and the clay film composite illustrated in FIG. 2 was produced.

(Example 4)

A clay film composite was produced in the same manner as in Example 1, except that the clay film produced in Example 1 was left to stand for 20 minutes in a room at 25°C and 60% RH, and the water content of the clay film was adjusted to 2.9% by mass. The distance between the clay particle layers at this time was 1.28 nm.

(Comparative Example 1)

A clay film composite was produced in the same manner as in Example 1, except that a polystyrene film having a water vapor permeability of 35 g/m$^2$·day, an oxygen permeability of 430 cc/m$^2$·day·atm, and a thickness of 120 $\mu$m was used as the water vapor barrier layer on both surfaces of the clay film produced in Example 1, and the clay film and the water vapor barrier layers were respectively melt-bonded (thermally compressed) in a vacuum heating furnace at a temperature of 120°C.

<Evaluation>

(Distance between clay particle layers)

The distance between the clay particle layers of the clay film was measured as follows.
The 2θ values of the diffraction peaks obtainable by the diffraction of the laminated surface of clay were measured using an X-ray diffraction analyzer (manufactured by Rigaku Corp., RINT-ULTIMA III), and the (001) spacing of clay was calculated using Bragg's diffraction formula described below. The d (nm) below represents the distance between clay particle layers.

$$\lambda = 2d\sin\theta$$

In the formula, $\lambda$ (nm) = 0.154, and $\theta$ (degree) is the diffraction angle.

(Water vapor permeability and oxygen permeability)

The water vapor permeabilities and oxygen permeabilities of the water vapor barrier layer and the clay film composite before bending were measured as follows.
The permeabilities of water vapor and oxygen under the measurement conditions of 40°C/90% RH were measured according to JIS K7129 and JIS K7126 using a differential pressure gas permeability analyzer (GTR-30 XATS, manufactured by GTR Tec Corp.).

(Hydrogen permeability)

The hydrogen permeability of the clay film composite before bending was measured as follows.
The permeability of hydrogen under the measurement conditions of 25°C in a dry state was measured according to JIS K7129 and JIS K7126 using a differential pressure gas permeability analyzer (GTR-30 XATS, manufactured by GTR Tec Corp.). Furthermore, for the sample supplied to the measurement, a sample that had been exposed in advance to the conditions of 40°C/90% RH for 24 hours was used.

(Oxygen permeability after bending)

The oxygen permeability after bending was measured by winding a clay film composite around an object having a radius of curvature of 5 mm to bend the clay film composite, and then measuring the oxygen permeability.
The results thus obtained are summarized in Table 1.
[Table 1]

| | | Example 1 | Example 2 | Example 3 | Example 4 | Comparative Example 1 |
|---|---|---|---|---|---|---|
| Water vapor permeability of water vapor barrier layer (g/m$^2$· day) | | 0.007 | 0.21 | 0.72 | 0.007 | 35 |
| Oxygen permeability of water vapor barrier layer (cc/m$^2$·day·atm) | | 215 | 430 | 980 | 215 | 430 |
| Distance between clay particle layers (nm) | | 1.17 | 1.17 | 1.17 | 1.28 | 1.17 |
| Hydrogen permeability (cc/m$^2$·day·atm) | | 0.09 | 0.12 | 0. 14 | 0.85 | 137 |
| Oxygen permeability (cc/m$^2$·day·atm) | Before bending | 0.036 | 0.59 | 0.73 | 0.49 | 90 |
| | After bending | 0.033 | 0.62 | 0.91 | 0.51 | 200 |

As summarized in Table 1, it was confirmed that the clay film composites of the Examples have low oxygen permeability and exhibit high gas barrier properties under high humidity conditions.

Furthermore, since the hydrogen permeability is to be measured in a dry atmosphere, pseudo-high humidity conditions were manipulated by exposing a clay film composite to 40°C/90% RH before measurement. According to this method, it was confirmed that under pseudo-high humidity conditions, the clay film composites of the Examples have low hydrogen permeabilities, and exhibit high gas barrier properties.

As such, according to the invention, a clay film composite which exhibits high gas barrier properties even under high humidity conditions can be provided.

Furthermore, as summarized in Table 1, since the clay film composites of the Examples did not undergo much change in the oxygen permeability before and after bending, the clay film composites were found to have excellent bending resistance.

Reference Signs List

1, 2      CLAY FILM COMPOSITE
10, 11    FIRST WATER VAPOR BARRIER LAYER
20, 21    CLAY FILM
30, 31    SECOND WATER VAPOR BARRIER LAYER

**Claims**

1.  A clay film composite comprising a clay film comprising a clay only or of a clay and an additive, and provided on at least one surface thereof, a water vapor barrier layer having a water vapor permeability of 1.0 g/m$^2$·day or less.

2.  The clay film composite according to claim 1, wherein the distance between clay particle layers of the clay film is 1.3 nm or less.

3.  The clay film composite according to claim 1 or 2, wherein the water content of the clay film is 3.0% by mass or less.

4.  The clay film composite according to any one of claims 1 to 3, wherein the water vapor barrier layer and the clay film are melt-bonded.

5.  The clay film composite according to any one of claims 1 to 4, wherein a principal constituent component of the clay film is a natural clay or a synthetic clay.

6.  The clay film composite according to claim 5, wherein the natural clay or synthetic clay is one or more selected from the group consisting of kaolinite, dickite, halloysite, chrysotile, lizardite, amesite, pyrophyllite, talc, montmorillonite, beidellite, nontronite, stevensite, saponite, hectorite, sauconite, dioctahedral vermiculite, trioctahedral vermiculite, muscovite, paragonite, illite, sericite, phlogopite, biotite, lepidolite, magadiite, ilerite, kanemite, and layered titanate.

7. The clay film composite according to any one of claims 1 to 6, wherein the additive in the clay film is soluble in a polar solvent at a solids concentration of 1% by mass or more.

8. The clay film composite according to any one of claims 1 to 7, wherein the proportion of the additive in the clay film is 20% by mass or less.

9. The clay film composite according to claim 7, wherein the polar solvent is one or more selected from the group consisting of water, acetonitrile, alcohols, N,N-dimethylformamide, dimethylacetamide, dimethyl sulfoxide and 1-methyl-2-pyrrolidone.

10. The clay film composite according to any one of claims 1 to 9, wherein the water vapor barrier layer is one or more selected from the group consisting of polychlorotrifluoroethylene (PCTFE), polytetrafluoroethylene (PTFE), a tetrafluoroethylene-hexafluoropropylene copolymer (FEP), polyethylene (PE), polyethylene naphthalate (PEN), polypropylene (PP), a cycloolefin polymer (COP), a norbornene-containing resin, polyvinylidene chloride (PVDC), polyvinyl chloride (PVC), polyvinyl fluoride (PVF), a liquid crystal polymer (LCP), an aromatic polyamide, a metal film, a metal oxide film, a silicon oxide film, a silicon nitride film, a silicon oxynitride film, an indium tin oxide (ITO) film, a boron nitride film, a carbon nitride film, an aluminum nitride film, a carbon film, and an organically modified hydrophobic clay film.

11. The clay film composite according to any one of claims 1 to 10, wherein the thickness of the water vapor barrier layer is 2 $\mu$m to 100 $\mu$m.

12. The clay film composite according to any one of claims 1 to 11, wherein the surface and end faces of the clay film are covered by the water vapor barrier layer.

[FIG. 1]

[FIG. 2]

[FIG. 3]

[FIG. 4]

## INTERNATIONAL SEARCH REPORT

| | International application No. |
|---|---|
| | PCT/JP2010/007483 |

A. CLASSIFICATION OF SUBJECT MATTER
*B32B9/00*(2006.01)i, *B32B27/00*(2006.01)i, *C01B33/40*(2006.01)i

According to International Patent Classification (IPC) or to both national classification and IPC

B. FIELDS SEARCHED

Minimum documentation searched (classification system followed by classification symbols)
B32B1/00-43/00, C01B33/20-39/54

Documentation searched other than minimum documentation to the extent that such documents are included in the fields searched

| Jitsuyo Shinan Koho | 1922–1996 | Jitsuyo Shinan Toroku Koho | 1996–2011 |
|---|---|---|---|
| Kokai Jitsuyo Shinan Koho | 1971–2011 | Toroku Jitsuyo Shinan Koho | 1994–2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 2006-188408 A  (National Institute of Advanced Industrial Science and Technology), 20 July 2006 (20.07.2006), claims 1, 3; paragraphs [0011] to [0013], [0020] to [0021] & EP 1832553 A1 paragraphs [0010] to [0012], [0020] to [0021]; claims 1, 3 & US 2009/0274860 A1    & WO 2006/062209 A1 | 1-3,5-12<br>4 |
| X<br>A | JP 2007-22075 A  (Asahi Kasei Corp.), 01 February 2007 (01.02.2007), claims 1, 4 to 9; paragraphs [0019], [0022], [0032], [0036] (Family: none) | 1-3,5-12<br>4 |

| ☒ | Further documents are listed in the continuation of Box C. | ☐ | See patent family annex. |
|---|---|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 01 March, 2011 (01.03.11) | 08 March, 2011 (08.03.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| International application No. |
| --- |
| PCT/JP2010/007483 |

C (Continuation).   DOCUMENTS CONSIDERED TO BE RELEVANT

| Category* | Citation of document, with indication, where appropriate, of the relevant passages | Relevant to claim No. |
| --- | --- | --- |
| X<br>A | JP 1-95044 A  (Nissan Maruzen Polyethylene<br>Kabushiki Kaisha),<br>13 April 1989 (13.04.1989),<br>claims; page 2, upper right column, line 20 to<br>lower left column, line 3; page 2, lower right<br>column, line 15 to page 3, upper left column,<br>line 1; page 3, upper left column, lines 6 to<br>9; page 3, lower left column, lines 16 to 19<br>(Family: none) | 1,4-6,10-12<br>2,3,7-9 |
| A | JP 2007-83573 A  (Tomoegawa Paper Co., Ltd.),<br>05 April 2007 (05.04.2007),<br>claim 1<br>& EP 1938965 A1<br>claim 1<br>& US 2009/0141230 A1    & WO 2007/034775 A1<br>& KR 10-2008-0049120 A  & CN 101267940 A | 1-12 |

Form PCT/ISA/210 (continuation of second sheet) (July 2009)

**EP 2 517 874 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2007084386 A
- JP 2006188408 A